# EUROPEAN PATENT SPECIFICATION

(11) **EP 4 502 741 B1**
(45) Date of publication and mention of the grant of the patent: **30.09.2026**
(21) Application number: 23188985.8
(22) Date of filing: 01.08.2023
(51) Int. Cl.: G05B 19/042

(54) **DEVICE DETECTION IN PROCESS CONTROL SYSTEMS**
ERKENNUNG VON GERÄTEN IN PROZESSSTEUERUNGSSYSTEMEN
DÉTECTION DE DISPOSITIF DANS DES SYSTÈMES DE COMMANDE DE PROCESSUS

(43) Date of publication of application: 05.02.2025
(73) Proprietor: ABB SCHWEIZ AG, 5400 Baden (CH)
(72) Inventor: POOK, Stefan, 32423 Minden (DE); KEUL, Thomas, 63579 Freigericht (DE); BEBERNIK, Arthur, 31675 Bueckeburg (DE); SHI, Huan, Shangcheng District, Hangzhou, 310000 (CN); HONG, TingTing, Shangcheng District, Hangzhou, 310000 (CN)
(74) Representative: Maiwald GmbH

(56) References cited:
- EP-B1- 2 237 120
- US-A1- 2009 319 062

## Description

### FIELD OF THE INVENTION

The invention relates to a process control system, a process control method, and to a corresponding computer-readable medium.

### BACKGROUND

In the field of industrial automation, process control systems are used to control production processes carried out by production plants, e.g. in the process industry or automobile industry. During the process of designing and commissioning the plant, the process control system is provided with engineering data (using an engineering tool) defining relevant plant topology and a configuration for each of its fieldbus communications interfaces. The controller subsequently configures the fieldbus communications interfaces according to the engineering data, to enable subsequent communications with the associated field devices. Without such engineering data, the process control application remains in an idle state and no communication with the field devices takes place. The approach of configuring fieldbus communications interfaces using the engineering tool in this way is inflexible, complex, time-consuming, and error-prone.

EP 2 237 120 B1 relates to a universal network adapter for a control system which provides an appliance receiving a user selection of network cards for different proprietary network types and an internal interpreter running custom scripts downloadable to the appliance to map the network protocols of the different networks to a single common network. US 2009/319062 A1 relates to an apparatus for automatically registering topology of individual components of a process installation in automation technology using radio tags associated with field devices.

### SUMMARY

To better address one or more of these concerns, in a first aspect of invention there is provided a process control system according to claim 1.

Automatic device detection performed in relation to the adapter in this way enables the controller to begin communicating with the field device before any engineering data is received from an engineering tool, thereby reducing one or more of complexity, time expenditure, and susceptibility to error in the design and commissioning of the automation system.

The controller comprises a universal communications interface configured to serve as a communications interface in communciations between the controller and the at least one field device, wherein the universal communications interface is configured to implement a plurality of communications protocols, and wherein the controller configures the universal communications interface to operate using the communications protocol that is selected according to the detected adapter type. The term "universal" may be taken to indicate that the communications interface is protocol-agnostic or a multi-protocol communications interface. The universal communications interface may be implemented as a universal communications processor.

Thus, the controller may be configured to select the communications protocol, and/or to configure the universal communications interface accordingly, without having any configuration from the engineering tool, that is, independently of any such configuration or before any such configuration is received. In this way, design and commissioning of the automation system may be further simplified, expedited, robustified.

The controller is configured to detect the adapter type by obtaining an identifier of the coupled adapter. The identifier identifies at least a type or class of the adapter. The identifier may comprise a serial number of the adapter. The identifier is associated with at least one communications protocol, such that the controller is able to determine, from the identifier alone, the at least one communications protocol used by the adapter. In one example, the controller obtains the identifier directly from the adapter, for example by reading the identifier from memory located in the adapter and/or in its inlay. In another example, detecting the adapter type may comprise detecting a type of the inlay, where the inlay type uniquely identifies the communications protocol to be used by the associated adapter type. In other examples, both the detector type and the inlay type may be used to determine the communications protocol. In other examples, trial- and-error using at least one standard read transaction may be used to determine the adapter type. By detecting the adapter type in any of the ways described herein, the controller is able to determine the communication protocol to be used without assistance from any external source, for example the engineering tool, such that the controller exhibits self-learning capability for ascertaining the communication protocol to be used.

The controller may be configured to detect coupling of the adapter to the process control system and to select the communications protocol in response to the detection of the coupling of the adapter. More particularly, the controller may be configured to detect coupling of the adapter to the process control system and to configure the universal communications interface to operate using the communications protocol in response to the detection of the coupling of the adapter. Coupling of the adapter to the process control system may take place during commissioning of the automation system or later during plant operation in the case that a preexisting adapter needs to be replaced. In one example, the controller is configured to detect coupling of the adapter by polling at least one predetermined address at which the adapter may be found, and ascertaining coupling in response to a response to the polling from the adapter. In such cases, the controller and the adapter may be configured to communicate via a standardized interface, such as an I2C interface in which the controller is master.

The controller may be further configured to detect the at least one field device communicatively coupled to the process control system via the adapter. Detecting the at least one field device may comprise using at least one prototocol-specific device configuration protocol whereby field devices can be found without knowing their IP or MAC address. In one example, the protocol comprises the controller sending ping signals to predetermined addresses at which field devices may potentially be found and, based on device responses, generating a live list indicating which devices are to be found at which address, as in the case of PROFIBUS, for example. The controller may be configured to obtain field device information from the at least one field device. The field device information obtained from the at least one field device may comprise information identifying the at least one field device and/or indicating a type or class of the at least one field device. The field device information may comprise a serial number of the at least one field device. The field device information may indicate what hardware, firmware, and/or software is available at the field device.

The controller may be configured to determine a topology of at least part of the automation system based on the obtained field device information. The controller may be configured to validate the determined topology against an expected topology. The expected topology may be obtained from an engineering tool communicatively coupled to the process control system. Data regarding the determined topology and/or the detected devices may be communicated to, or made available to, the engineering tool and/or to a local diagnostic tool.

In any of the arrangements disclosed herein, the communications protocol selected by the controller may comprise a fieldbus protocol, e.g., PROFIBUS, CAN, MODBUS. By "protocol" is meant a system of rules or a preagreed format for communications.

In any of the arrangements disclosed herein, the controller may be configured to perform a pre-check to ascertain that the adapter is not being used by another controller before using it.

In any of the arrangements disclosed herein, the controller may be configured to listen to the fieldbus before actively communicating on the bus to avoid disturbance to other devices such as an active controller.

In any of the arrangements disclosed herein, all interfaces between the controller (or, more particularly, its CPU) and the adapter may be media independent, where those between the adapter and the at least one field device may be media dependent (in the arrangement disclosed herein, the adapter implements layer 1 translation). By "media independent" is meant that different types of PHY devices (physical layer or layer 1 devices) for connecting to different network signal transmission media (e.g., twisted pair, fiber optic, etc.) can be used without redesigning or replacing the MAC hardware. In other words, any MAC may be used with any PHY, independent of the network signal transmission media.

In a second aspect, there is provided a process control method performed by a controller of a process control system according to claim 12.

Any of the optional features or subaspects of the first aspect may be applied to the second aspect, mutatis mutandis.

The method of the second aspect may be computer implemented.

According to a third aspect, there is provided a computer-readable medium according to claim 13.

The invention may include one or more aspects, examples or features in isolation or combination whether specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

By "(process) automation system" is meant an industrial plant or production plant comprising one or more pipelines, production lines, and/or assembly lines for transforming one or more educts into a product and/or for assembling one or more components into a final product.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form. Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

### BRIEF DESCRIPTION OF THE DRAWINGS

A detailed description will now be given, by way of example only, with reference to the accompanying drawings, in which:-
FIG. 1 illustrates a process control system;
FIG. 2 schematically illustrates components of the process control system of FIG. 1 in situ;
FIG. 3 illustrates an autoconfiguration method for the process control system of FIG. 1; and
FIG. 4 illustrates a computing system that can be used in accordance with the systems and methods disclosed herein.

### DETAILED DESCRIPTION

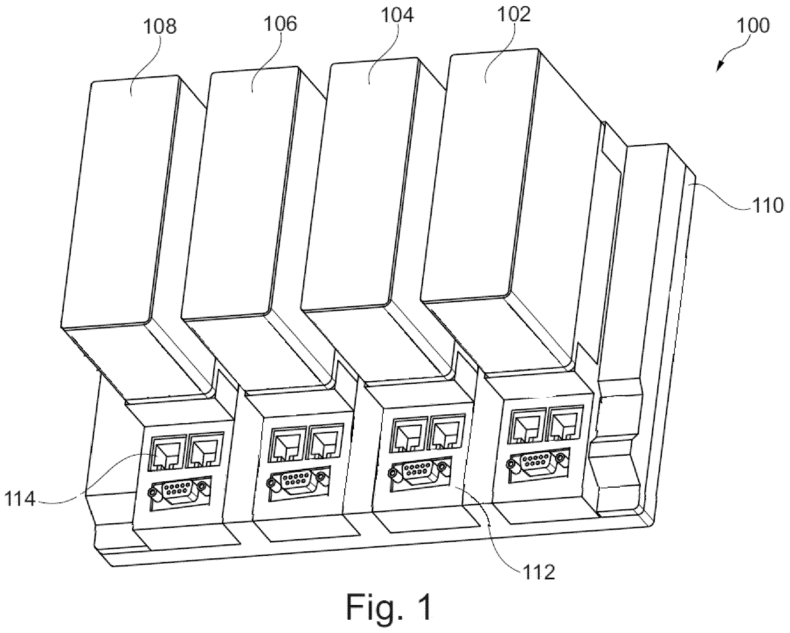

FIG. 1 illustrates a process control system 100 for controlling an industrial process carried out by an automation system (not shown). The process control system 100 comprises several different hardware units 102-108 physically and communicatively coupled to one another via a mounting termination unit (MTU) 110, commonly known as a backplane. The units illustrated in FIG. 1 include a standalone controller 102, a standalone fieldbus adapter 104 of a first type, a standalone fieldbus adapter 106 of a second type, and a controller 108 comprising an integrated fieldbus adapter. Each controller 102, 108 communicates with other components of the automation system, such as the engineering tool 200 described herein, over a control network. To that end, each controller 102, 108 is provided with network interfaces, such as that illustrated at 114, for communication via at least one ethernet-based fieldbus. Whenever a controller is required to communicate with a non-ethernet based fieldbus (e.g. PROFIBUS), a fieldbus adapter is required. The fieldbus adapter may be integrated into the controller unit, as in the case of controller 108, in which case no configuration by the engineering tool is required but no flexibility to add or change the fieldbus is afforded. Alternatively, the controller and adapter may be implemented as separate units, as in the case of units 102, 104, which provides flexibility in deployment but which requires the controller 102 to obtain configuration data.

The mounting termination unit (MTU) 110 comprises a number of slots for accommodating the units 102-108. Each slot is provided with an inlay 112 corresponding to the type of unit that will be accommodated in that slot. Each unit 102-108 can be detachably connected to the mounting termination unit 110 via the corresponding inlay 112. The mounting termination unit 110 may further comprise circuitry (not shown) for powering the units and/or for accommodating a power module.

Each controller 102, 108 is configured to control a respective process carried out by the automation system (not shown). The process control system 100 may find application in any field of industry where process automation is desired, such as energy, oil and gas, chemical, petrochemical, and so on. The controller 102, 108 handles process control and monitoring for the automation system by receiving input signals from sensors and instruments, and outputting control signals for controlling plant equipment such as pumps, valves, conveyors, mixers, and heaters. Any such sensor, instrument or plant equipment may form part of one or more of the field devices 202 described herein. The controller 102, 108 is configured to execute a process control application to generate the control signals on the basis of the input signals. The control application may comprise control logic instructing the controller 102, 108 how to respond to all input signals with appropriate control signals to maintain normal functioning of the process. In one non-limiting example, the control application conforms to the international standard IEC 61131.

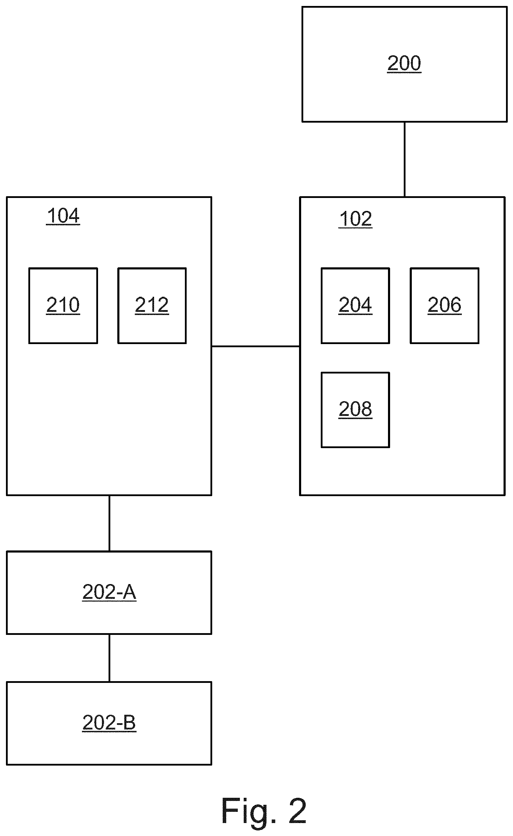

FIG. 2 schematically illustrates the process control system 100 in situ, that is, in communication with the engineering tool 200 and with one or more field devices 202, which in the non-limiting example depicted in the figure include field device 202-A and field device 202-B. For convenience, only the controller 102 and the adapter 104 are illustrated in FIG. 2.

The engineering tool 200 (typically implemented as a software package) is used to create configuration data for the process control system 100, which can be downloaded to the controller 102.

The controller 102 comprises logic circuitry 204 configured to execute the control application. The logic circuitry 204 may comprise a CPU, MCU, SoC, FPGA, DSP, and/or an Al-engine, together with any memory to be used in the processing of signals. The logic circuitry 204 may be further configured to perform any one or more of the other operations described herein.

The controller 102 further comprises a communications interface 206 for handling communications between the logic circuitry 204 and the fieldbus adapter 104.

The controller 102 further comprises power down circuitry 208 for handling power down sequencing in case of power loss.

The fieldbus adapter 104 comprises a fieldbus communications interface (FCI) 210 for interfacing with the field devices 202 over a communications network in the form of a fieldbus. The fieldbus communications interface 210 comprises fieldbus-specific transceivers and/or hardware drivers for the fieldbus protocol implemented by the adapter 104. The adapter 104 may be furthermore connectable to least one input/output (I/O) module for inputting signals from, and/or outputting signals to, the field devices 202.

The adapter 104 further comprises non-volatile storage 212 storing data including an identifier of the adapter 104.

One known workflow for configuring the process control system 100 involves using the engineering tool 200 to create configuration data for the controller 102, based on a known topology of the plant, and downloading the configuration data to the controller 102, whereafter the controller 102 is enabled to communicate with the field devices 202 via the fieldbus adapter 104 when executing the control application. One problem with this known approach is that installation faults may only become apparent once the control application is executing, which precludes early validation of the hardware installation. Stated differently, the control application must be prepared for testing before any validation of the installed hardware can take place, which complicates or hinders the plant engineering workflow.

The present disclosure thus envisages novel apparatus and methods which aim to simplify or rationalize the process control hardware and/or the plant engineering workflow.

Referring again to FIG. 2, the communications interface 206 of the controller 102 of the present disclosure comprises a universal communications interface 206 which is configured to communicate using a plurality of fieldbus protocols (e.g. PROFIBUS, CAN, MODBUS). More particularly, the universal communications interface serves as a fieldbus communications interface for each type of fieldbus protocol used by the field devices, in that it handles fieldbus-specific communications in layers 2 to 7 of each of the relevant fieldbus communication protocols. In one non-limiting example, the universal communications interface 206 comprises programmable logic circuitry, for example a field-programmable gate array (FPGA), optionally inside a system-on-chip (SoC). The FPGA is partitioned to support the plurality of fieldbus protocols. Following detection of the adapter type, the programmable logic circuitry may be reconfigured, for example by loading an appropriate configuration to the FPGA (without disturbing other channels) so as to load the correct protocol handler into the FPGA.

Furthermore, according to the present disclosure, the fieldbus adapter 104 takes the form of a fieldbus physical layer adapter 104 in which the communications interface 210 comprises a physical signal conversion unit 210 for handling (preferably only) communications in the physical layer (layer 1) of one specific fieldbus protocol, in order to implement the physical layer translation.

The fieldbus physical layer adapter 104 is configured to provide access to its hardware ID from non-volatile storage 212, for example when queried, whereby the logic circuitry 204 is able to identify the adapter 104 to determine which fieldbus protocol it uses. The logic circuitry 204 is furthermore able to configure the universal communications interface 206 to operate according to the fieldbus protocol used by the fieldbus adapter 104.

As mentioned herein, the adapter 104 is of a first type, that is, the adapter 104 implements the physical layer of a first fieldbus protocol, whereas the adapter 106 is of a second type, that is, the adapter 106 implements the physical layer of a second fieldbus protocol.

Thus, when the fieldbus physical layer adapter 104 of the first type (e.g. PROFIBUS) is mounted to the MTU 106, the universal communications interface 206 communicates using the first fieldbus protocol, whereas, when the fieldbus physical layer adapter 106 of the second type (e.g. CAN) is mounted, the universal communications interface 206 communicates using the second fieldbus protocol. In this way, the logic circuitry 204 is configured automatically to identify or recognize the (type of the) fieldbus physical layer adapter and to configure the universal communications interface 206 accordingly, without user intervention. Meanwhile, since communication in higher protocol layers is handled by the universal communications interface 206, the adapter 104, 106 need include only the physical layer conversion unit 210 and can thus be simplified by omission of circuitry for handling the higher layers of the protocol stack. The approach disclosed herein thus provides the possibility of performing bottom-up engineering for fieldbus adapters and/or fieldbus devices. The engineering process is simplified and fault detection in the actual installed hardware is expedited by having access to information (such as installed hardware, serial number, hardware/firmware revision etc.) from the fieldbus adapters and the fieldbus devices.

Following automatic configuration of the universal communications interface 206, the logic circuitry 204 may proceed to detect the available field devices 202-A, 202-B via the appropriately configured universal communications interface 206 together with the fieldbus physical layer adapter 104. The information so collected may be used to validate the hardware installation. The information collected from the fieldbus devices 202 can be used to determine the topology of the automation system. The collected information may be used for further purposes, such as:-
- presentation of the actual hardware arrangement to the user to facilitate an overview of the health of the installed hardware;
- import of the actual hardware arrangement to the engineering tool 200, for example to expedite commissioning;
- consistency check involving comparing the detected topology to an expected topology obtained from the engineering tool 200.

In other instances, the logic circuitry 204 may refrain from accessing the fieldbus devices 202, e.g. to avoid disturbing the operation of other controllers or adapters.

Although the logic circuitry 204 and the universal communications interface 206 are illustrated in FIG. 2 as two separate units, it will be appreciated that they be implemented by the same unit or in a more distributed manner.

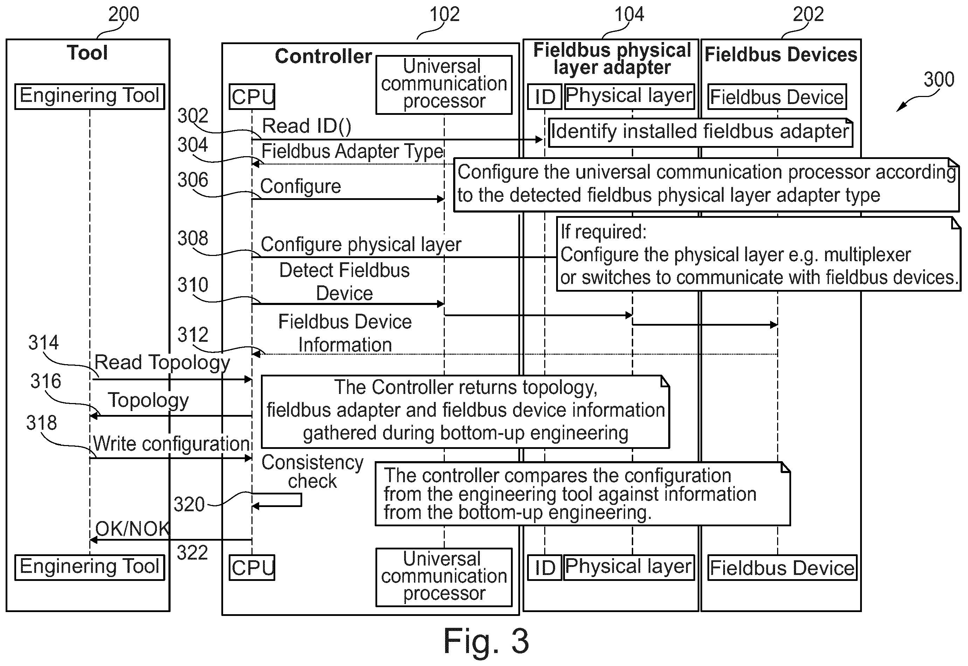

FIG. 3 illustrates an autoconfiguration method 300 for the process control system 100. The method may be performed by the controller 102, and more particularly by the logic circuitry 204. The method begins at step 302 with the logic circuitry 204 reading the ID from the non-volatile storage 212 of the installed adapter 104 in order to identify it. At step 304, the adapter 104 returns its ID, which corresponds to a particular fieldbus adapter type. At step 306, the logic circuitry 204 configures the universal communications interface 206 according to the detected fieldbus physical layer adapter type. At step 308, the logic circuitry 204 optionally configures the physical signal conversion unit 210 of the adapter 104, if necessary (for example to configure a multiplexor or switches to communicate with fieldbus devices). At step 310, the logic circuitry 204 detects fieldbus devices 202 connected to the adapter 104 and thereby obtains fieldbus device information at step 312. Once the fieldbus device information has been obtained, the logic circuitry 204 may respond to a topology read request received from the engineering tool 200 (which may be received at any point in the sequence of operations prior to that shown in FIG. 3) by returning the topology at step 316, along with information characterizing the adapter 104 and field devices 202. In response to a request received from the engineering tool (200) at step 318, the logic circuitry 204 may perform a consistency check at step 320 to compare information obtained from the engineering tool 200 with the information obtained earlier in the autoconfiguration process, following which it returns either a positive or a negative acknowledgement at step 322. The autoconfiguration method may form part of a process control method comprising the further step of the controller 102 communicating with the field devices 202 using the detected fieldbus protocol to control an industrial process carried out by the automation system.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

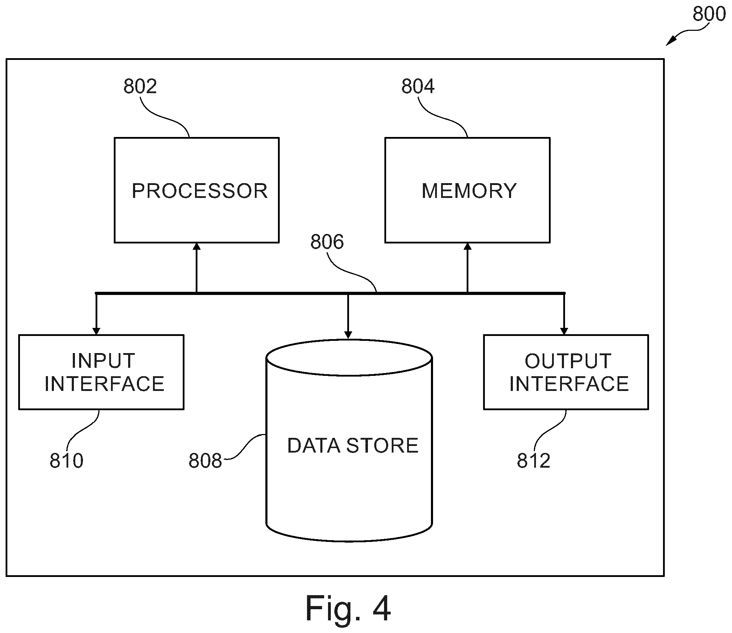

FIG. 4 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A process control system (100) comprising a controller (102) and at least one fieldbus physical layer adapter (104) communicatively coupled to the controller (102), ,
wherein the at least one fieldbus physical layer adapter (104) is for coupling at least one field device (202) of an automation system to the process control system (100),
wherein the controller is configured, in use:
to detect an adapter type of the at least one fieldbus physical layer adapter (104);
to automatically select a fieldbus protocol according to the detected adapter type, wherein the fieldbus protocol is for communicating with the at least one field device; and
to communicate with the at least one field device using the selected fieldbus protocol to control an industrial process carried out by the automation system,
wherein the controller comprises a universal communications interface (206) configured to serve as a communications interface in communciations between the controller (102) and the at least one field device (202), wherein the universal communications interface is configured to implement a plurality of fieldbus protocols, wherein the controller configures the universal communications interface to operate using the fieldbus protocol that is selected according to the detected adapter type,
wherein the at least one fieldbus physical layer adapter (104) comprises a physical signal conversion unit (210) for handling communications only in a physical layer of a specific one of the plurality of fieldbus protocols, and
wherein the universal communications interface (206) is configured to handle communication in protocol layers higher than the physical layer.

2. The process control system (100) of claim 1, wherein the controller (102) is further configured to detect the adapter type by obtaining an identifier (210) of the coupled at least one fieldbus physical layer adapter (104) or an identifier of an inlay (112) for the coupled at least one fieldbus physical layer adapter.

3. The process control system (100) of any preceding claim, wherein the controller (102) is further configured to detect coupling of the at least one fieldbus physical layer adapter (104) to the process control system (100) and to select the communications protocol in response to the detection of the coupling of the at least one fieldbus physical layer adapter.

4. The process control system (100) of any preceding claim, wherein the controller (102) is further configured to detect the at least one field device (202) communicatively coupled to the process control system (100) via the at least one fieldbus physical layer adapter (104).

5. The process control system (100) of any preceding claim, wherein the controller (102) is further configured to obtain field device information from the at least one field device (202).

6. The process control system (100) of claim 5, wherein the controller (102) is further configured to determine a topology of at least part of the automation system based on the obtained field device information.

7. The process control system (100) of claim 6, wherein the controller (102) is further configured to validate the determined topology against an expected topology.

8. The process control system (100) of claim 7, wherein the expected topology is obtained from an engineering tool (200) communicatively coupled to the process control system (100).

9. The process control system (100) of any preceding claim, wherein the selection of the communications protocol according to the detected adapter type takes place before the controller (102) receives any configuration or topology information from an engineering tool (200), or independently of any such configuration or topology information received prior to the selection.

10. The process control system (100) of any preceding claim, further comprising logic circuitry (204) configured to execute a control application for controlling the industrial process carried out by the automation system.

11. The process control system (100) of any preceding claim, wherein the controller (102) is configured to be communicatively coupled to the at least one fieldbus physical layer adapter (104) via a mounting termination unit (106) of the process control system (100).

12. A process control method performed by a controller (102) of a process control system (100), the process control system (100) further comprising at least one fieldbus physical layer adapter (104) communicatively coupled to the controller, wherein the at least one fieldbus physical layer adapter (104) is for coupling at least one field device (202) of an automation system to the process control system (100), the method comprising:
detecting (302, 304) an adapter type of the at least one fieldbus physical layer adapter (104);
selecting (306) a communications protocol according to the detected adapter type, wherein the communications protocol is for communicating with the at least one field device; and
communicating with the at least one field device using the selected communications protocol to control an industrial process carried out by the automation system,
wherein the controller comprises a universal communications interface (206) which serves as a communications interface in communciations between the controller (102) and the at least one field device (202), wherein the universal communications interface implements a plurality of fieldbus protocols, wherein the controller configures the universal communications interface to operate using the fieldbus protocol that is selected according to the detected adapter type,
wherein the at least one fieldbus physical layer adapter (104) comprises a physical signal conversion unit (210) for handling communications only in a physical layer of a specific one of the plurality of fieldbus protocols, and
wherein the universal communications interface (206) handles communication in protocol layers higher than the physical layer.

13. A computer-readable medium (804) comprising instructions which, when executed by a computing system (800), cause the computing system to perform the method of claim 12.

## Patentansprüche

1. Prozesssteuerungssystem (100), umfassend einen Controller (102) und mindestens einen Feldbus-Physical-Layer-Adapter (104), der mit dem Controller (102) kommunikationstechnisch gekoppelt ist,
wobei der mindestens eine Feldbus-Physical-Layer-Adapter (104) zum Koppeln mindestens eines Feldgeräts (202) eines Automatisierungssystems an das Prozesssteuerungssystem (100) vorgesehen ist,
wobei der Controller im Betrieb dazu eingerichtet ist:
einen Adaptertyp des mindestens einen Feldbus-Physical-Layer-Adapters (104) zu detektieren;
gemäß dem detektierten Adaptertyp automatisch ein Feldbusprotokoll auszuwählen, wobei das Feldbusprotokoll zum Kommunizieren mit dem mindestens einen Feldgerät vorgesehen ist; und
unter Verwendung des ausgewählten Feldbusprotokolls mit dem mindestens einen Feldgerät zu kommunizieren, um einen von dem Automatisierungssystem ausgeführten industriellen Prozess zu steuern,
wobei der Controller eine universelle Kommunikationsschnittstelle (206) umfasst, die dazu eingerichtet ist, als Kommunikationsschnittstelle in Kommunikationen zwischen dem Controller (102) und dem mindestens einen Feldgerät (202) zu dienen, wobei die universelle Kommunikationsschnittstelle dazu eingerichtet ist, eine Mehrzahl von Feldbusprotokollen zu implementieren, wobei der Controller die universelle Kommunikationsschnittstelle so konfiguriert, dass sie unter Verwendung des gemäß dem detektierten Adaptertyp ausgewählten Feldbusprotokolls arbeitet,
wobei der mindestens eine Feldbus-Physical-Layer-Adapter (104) eine physikalische Signalumwandlungseinheit (210) zur ausschließlichen Handhabung von Kommunikation auf der physikalischen Schicht eines spezifischen der Mehrzahl von Feldbusprotokollen umfasst, und
wobei die universelle Kommunikationsschnittstelle (206) dazu eingerichtet ist, Kommunikation in Protokollschichten oberhalb der physikalischen Schicht zu handhaben.

2. Prozesssteuerungssystem (100) nach Anspruch 1, wobei der Controller (102) ferner dazu eingerichtet ist, den Adaptertyp zu detektieren, indem er eine Kennung (210) des gekoppelten mindestens einen Feldbus-Physical-Layer-Adapters (104) oder eine Kennung eines Inlays (112) für den gekoppelten mindestens einen Feldbus-Physical-Layer-Adapter erlangt.

3. Prozesssteuerungssystem (100) nach einem der vorhergehenden Ansprüche, wobei der Controller (102) ferner dazu eingerichtet ist, ein Koppeln des mindestens einen Feldbus-Physical-Layer-Adapters (104) an das Prozesssteuerungssystem (100) zu detektieren und das Kommunikationsprotokoll in Reaktion auf die Detektion des Koppelns des mindestens einen Feldbus-Physical-Layer-Adapters auszuwählen.

4. Prozesssteuerungssystem (100) nach einem der vorhergehenden Ansprüche, wobei der Controller (102) ferner dazu eingerichtet ist, das mindestens eine Feldgerät (202) zu detektieren, das über den mindestens einen Feldbus-Physical-Layer-Adapter (104) mit dem Prozesssteuerungssystem (100) kommunikationstechnisch gekoppelt ist.

5. Prozesssteuerungssystem (100) nach einem der vorhergehenden Ansprüche, wobei der Controller (102) ferner dazu eingerichtet ist, Feldgeräteinformationen von dem mindestens einen Feldgerät (202) zu erlangen.

6. Prozesssteuerungssystem (100) nach Anspruch 5, wobei der Controller (102) ferner dazu eingerichtet ist, auf Grundlage der erlangten Feldgeräteinformationen eine Topologie von mindestens einem Teil des Automatisierungssystems zu bestimmen.

7. Prozesssteuerungssystem (100) nach Anspruch 6, wobei der Controller (102) ferner dazu eingerichtet ist, die bestimmte Topologie gegenüber einer erwarteten Topologie zu validieren.

8. Prozesssteuerungssystem (100) nach Anspruch 7, wobei die erwartete Topologie von einem Engineering-Tool (200) erlangt wird, das mit dem Prozesssteuerungssystem (100) kommunikationstechnisch gekoppelt ist.

9. Prozesssteuerungssystem (100) nach einem der vorhergehenden Ansprüche, wobei die Auswahl des Kommunikationsprotokolls gemäß dem detektierten Adaptertyp stattfindet, bevor der Controller (102) irgendeine Konfigurations- oder Topologieinformation von einem Engineering-Tool (200) empfängt, oder unabhängig von jeder solchen vor der Auswahl empfangenen Konfigurations- oder Topologieinformation.

10. Prozesssteuerungssystem (100) nach einem der vorhergehenden Ansprüche, ferner umfassend eine Logikschaltung (204), die dazu eingerichtet ist, eine Steuerungsanwendung zum Steuern des von dem Automatisierungssystem ausgeführten industriellen Prozesses auszuführen.

11. Prozesssteuerungssystem (100) nach einem der vorhergehenden Ansprüche, wobei der Controller (102) dazu eingerichtet ist, über eine Montierungsabschlusseinheit (106) des Prozesssteuerungssystems (100) mit dem mindestens einen Feldbus-Physical-Layer-Adapter (104) kommunikationstechnisch gekoppelt zu werden.

12. Prozesssteuerungsverfahren, das von einem Controller (102) eines Prozesssteuerungssystems (100) durchgeführt wird, wobei das Prozesssteuerungssystem (100) ferner mindestens einen mit dem Controller kommunikationstechnisch gekoppelten Feldbus-Physical-Layer-Adapter (104) umfasst, wobei der mindestens eine Feldbus-Physical-Layer-Adapter (104) zum Koppeln mindestens eines Feldgeräts (202) eines Automatisierungssystems an das Prozesssteuerungssystem (100) vorgesehen ist, wobei das Verfahren umfasst:
Detektieren (302, 304) eines Adaptertyps des mindestens einen Feldbus-Physical-Layer-Adapters (104);
Auswählen (306) eines Kommunikationsprotokolls gemäß dem detektierten Adaptertyp, wobei das Kommunikationsprotokoll zum Kommunizieren mit dem mindestens einen Feldgerät vorgesehen ist; und
Kommunizieren mit dem mindestens einen Feldgerät unter Verwendung des ausgewählten Kommunikationsprotokolls, um einen von dem Automatisierungssystem ausgeführten industriellen Prozess zu steuern,
wobei der Controller eine universelle Kommunikationsschnittstelle (206) umfasst, die als Kommunikationsschnittstelle in Kommunikationen zwischen dem Controller (102) und dem mindestens einen Feldgerät (202) dient, wobei die universelle Kommunikationsschnittstelle eine Mehrzahl von Feldbusprotokollen implementiert,
wobei der Controller die universelle Kommunikationsschnittstelle so konfiguriert, dass sie unter Verwendung des Feldbusprotokolls arbeitet, das gemäß dem detektierten Adaptertyp ausgewählt wird,
wobei der mindestens eine Feldbus-Physical-Layer-Adapter (104) eine physikalische Signalumwandlungseinheit (210) zur ausschließlichen Handhabung von Kommunikation auf der physikalischen Schicht eines spezifischen der Mehrzahl von Feldbusprotokollen umfasst, und
wobei die universelle Kommunikationsschnittstelle (206) Kommunikation in Protokollschichten oberhalb der physikalischen Schicht handhabt.

13. Computerlesbares Medium (804), umfassend Anweisungen, die, wenn sie von einem Computersystem (800) ausgeführt werden, das Computersystem veranlassen, das Verfahren nach Anspruch 12 durchzuführen.

## Revendications

1. Système de contrôle de processus (100) comprenant un contrôleur (102) et au moins un adaptateur de couche physique de bus de terrain (104) couplé en communication avec le contrôleur (102),
où l'au moins un adaptateur de couche physique de bus de terrain (104) est destiné à coupler au moins un dispositif de terrain (202) d'un système d'automatisation au système de contrôle de processus (100),
où le contrôleur est configuré, lors de l'utilisation :
pour détecter un type d'adaptateur de l'au moins un adaptateur de couche physique de bus de terrain (104) ;
pour sélectionner automatiquement un protocole de bus de terrain selon le type d'adaptateur détecté, le protocole de bus de terrain étant destiné à communiquer avec l'au moins un dispositif de terrain ; et
pour communiquer avec l'au moins un dispositif de terrain en utilisant le protocole de bus de terrain sélectionné pour contrôler un processus industriel mis en œuvre par le système d'automatisation,
où le contrôleur comprend une interface de communication universelle (206) configurée pour servir d'interface de communication dans des communications entre le contrôleur (102) et l'au moins un dispositif de terrain (202), l'interface de communication universelle étant configurée pour mettre en œuvre une pluralité de protocoles de bus de terrain, le contrôleur configurant l'interface de communication universelle pour fonctionner à l'aide du protocole de bus de terrain sélectionné en fonction du type d'adaptateur détecté, où l'au moins un adaptateur de couche physique de bus de terrain (104) comprend une unité de conversion de signal physique (210) destinée à traiter les communications uniquement dans une couche physique d'un protocole spécifique de la pluralité de protocoles de bus de terrain, et
où l'interface de communication universelle (206) est configurée pour gérer la communication dans des couches de protocole supérieures à la couche physique.

2. Système de contrôle de processus (100) selon la revendication 1, dans lequel le contrôleur (102) est en outre configuré pour détecter le type d'adaptateur en obtenant un identifiant (210) de l'au moins un adaptateur de couche physique de bus de terrain couplé (104) ou un identifiant d'un insert (112) pour l'au moins un adaptateur de couche physique de bus de terrain couplé.

3. Système de contrôle de processus (100) selon l'une quelconque des revendications précédentes, dans lequel le contrôleur (102) est en outre configuré pour détecter le couplage de l'au moins un adaptateur de couche physique de bus de terrain (104) au système de contrôle de processus (100) et pour sélectionner le protocole de communication en réponse à la détection du couplage de l'au moins un adaptateur de couche physique de bus de terrain.

4. Système de contrôle de processus (100) selon l'une quelconque des revendications précédentes, dans lequel le contrôleur (102) est en outre configuré pour détecter l'au moins un dispositif de terrain (202) couplé en communication au système de contrôle de processus (100) par l'intermédiaire de l'au moins un adaptateur de couche physique de bus de terrain (104).

5. Système de contrôle de processus (100) selon l'une quelconque des revendications précédentes, dans lequel le contrôleur (102) est en outre configuré pour obtenir des informations de dispositif de terrain à partir de l'au moins un dispositif de terrain (202).

6. Système de contrôle de processus (100) selon la revendication 5, dans lequel le contrôleur (102) est en outre configuré pour déterminer une topologie d'au moins une partie du système d'automatisation sur la base des informations de dispositif de terrain obtenues.

7. Système de contrôle de processus (100) selon la revendication 6, dans lequel le contrôleur (102) est en outre configuré pour valider la topologie déterminée par rapport à une topologie attendue.

8. Système de contrôle de processus (100) selon la revendication 7, dans lequel la topologie attendue est obtenue à partir d'un outil d'ingénierie (200) couplé en communication au système de contrôle de processus (100).

9. Système de contrôle de processus (100) selon l'une quelconque des revendications précédentes, dans lequel la sélection du protocole de communication selon le type d'adaptateur détecté a lieu avant que le contrôleur (102) ne reçoive toute information de configuration ou de topologie provenant d'un outil d'ingénierie (200), ou indépendamment de toute information de configuration ou de topologie reçue avant la sélection.

10. Système de contrôle de processus (100) selon l'une quelconque des revendications précédentes, comprenant en outre des circuits logiques (204) configurés pour exécuter une application de contrôle pour contrôler le processus industriel exécuté par le système d'automatisation.

11. Système de contrôle de processus (100) selon l'une quelconque des revendications précédentes, dans lequel le contrôleur (102) est configuré pour être couplé en communication à l'au moins un adaptateur de couche physique de bus de terrain (104) par l'intermédiaire d'une unité de terminaison de montage (106) du système de contrôle de processus (100).

12. Procédé de contrôle de processus exécuté par un contrôleur (102) d'un système de contrôle de processus (100), le système de contrôle de processus (100) comprenant en outre au moins un adaptateur de couche physique de bus de terrain (104) couplé en communication au contrôleur, où l'au moins un adaptateur de couche physique de bus de terrain (104) est destiné à coupler au moins un dispositif de terrain (202) d'un système d'automatisation au système de contrôle de processus (100), le procédé comprenant les étapes suivantes :
détecter (302, 304) un type d'adaptateur de l'au moins un adaptateur (104) de couche physique de bus de terrain ;
sélectionner (306) un protocole de communication selon le type d'adaptateur détecté, le protocole de communication étant destiné à communiquer avec l'au moins un dispositif de terrain ; et
communiquer avec l'au moins un dispositif de terrain en utilisant le protocole de communication sélectionné pour contrôler un processus industriel mis en œuvre par le système d'automatisation,
où le contrôleur comprend une interface de communication universelle (206) qui sert d'interface de communication dans des communications entre le contrôleur (102) et l'au moins un dispositif de terrain (202), l'interface de communication universelle mettant en œuvre une pluralité de protocoles de bus de terrain, le contrôleur configurant l'interface de communication universelle pour fonctionner à l'aide du protocole de bus de terrain sélectionné en fonction du type d'adaptateur détecté,
où l'au moins un adaptateur de couche physique de bus de terrain (104) comprend une unité de conversion de signal physique (210) destinée à traiter les communications uniquement dans une couche physique d'un protocole spécifique de la pluralité de protocoles de bus de terrain, et
où l'interface de communication universelle (206) gère la communication dans des couches de protocole supérieures à la couche physique.

13. Support lisible par ordinateur (804) comprenant des instructions qui, lorsqu'elles sont exécutées par un système informatique (800), amènent le système informatique à réaliser le procédé selon la revendication 12.
